# EUROPÄISCHE PATENTSCHRIFT

(11) **EP 3 574 379 B1**
(45) Veröffentlichungstag und Bekanntmachung des Hinweises auf die Patenterteilung: **29.11.2023**
(21) Anmeldenummer: 18700901.4
(22) Anmeldetag: 17.01.2018
(51) Int. Cl.: G05B 19/404, B23D 59/00, B27B 5/06

(54) **VERFAHREN ZUM BETREIBEN EINER WERKSTÜCKBEARBEITUNGSANLAGE, SOWIE WERKSTÜCKBEARBEITUNGSANLAGE**
METHOD FOR OPERATING A WORKPIECE MACHINING SYSTEM, AND WORKPIECE MACHINING SYSTEM
PROCÉDÉ DE FONCTIONNEMENT D'UNE INSTALLATION DE TRAITEMENT DE PIÈCES À USINER, ET INSTALLATION DE TRAITEMENT DE PIÈCES À USINER

(30) Priorität: 26.01.2017 DE 102017101581
(43) Veröffentlichungstag der Anmeldung: 04.12.2019
(73) Patentinhaber: HOMAG Plattenaufteiltechnik GmbH, 75365 Calw (DE)
(72) Erfinder: KAISER, Jonathan, 71131 Jettingen (DE); BLAICH, Markus, 75365 Calw-Stammheim (DE); MARTYNENKO, Sergey, 71083 Herrenberg (DE)
(74) Vertreter: DREISS Patentanwälte PartG mbB
(86) Internationale Anmeldenummer: PCT/EP2018/051124
(87) Internationale Veröffentlichungsnummer: WO 2018/137985

(56) Entgegenhaltungen:
- DE-A1-102005 023 317
- DE-T5-112010 001 558
- JP-A- 2010 023 162

## Beschreibung

Die Erfindung betrifft ein Verfahren zum Betreiben einer Werkstückbearbeitungsanlage zum Bearbeiten insbesonders plattenförmiger Werkstücke, sowie eine Werkstückbearbeitungsanlage nach den Oberbegriffen der nebengeordneten Patentansprüche 1 und 12.

Eine Werkstückbearbeitungsanlage in Form einer Plattenbearbeitungsanlage ist beispielsweise aus der DE 10 2013 204 409 A1 bekannt. Die bekannte Plattenbearbeitungsanlage ist eine Aufteilsäge. Auf einem Zuführtisch liegende plattenförmige Werkstücke oder Werkstückstapel werden programmgesteuert einer Sägeeinrichtung zugeführt, die auf einem Sägewagen angeordnet ist. Der Sägewagen ist quer zur Vorschubrichtung des Programmschiebers bewegbar. Die Sägeeinrichtung ist als Kreissäge ausgebildet mit einem entsprechenden Antrieb, der ein Kreissägeblatt in eine Drehbewegung versetzt.

Vom Markt her sind noch andere Plattenbearbeitungsanlage zur Bearbeitung von plattenförmigen Werkstücken bekannt. Hierzu gehören beispielsweise sogenannte "Nestingmaschinen", bei denen das plattenförmige Werkstück beispielsweise mit Fräseinrichtungen und/oder Bohreinrichtungen bearbeitet wird.

Aus dem Stand der Technik (bspw. Zeitschrift Antriebstechnik 38 (1999), Nr. 5, S. 44-49, Uchtmann Kai, Wirth Rainer, Maschinendiagnose an drehzahlverändelichen Antrieben mittels Ordnungsanalyse) ist ferner bekannt, Schwingungen beispielsweise an Industriegetrieben sowie an drehzahlveränderlichen Antrieben zu erfassen und zu analysieren, und die Frequenz auftretender Schwingungen mit theoretischen Schadensfrequenzen zu vergleichen. Hierdurch wird eine Zustandsüberwachung realisiert, die Grundlage für eine zustandsorientierte Instandhaltung darstellen kann.

Die DE 10 2005 023 317 A1 beschreibt ein Verfahren zur Schwingungsoptimierung einer Werkzeugmaschine in Form einer klassischen CNC-Portalmaschine und offenbart ein Verfahren nach dem Oberbegriff des Anspruchs 1 und eine Werkstückbearbeitungsanlage nach dem Oberbegriff des Anspruchs 12. Die DE 11 2010 001 558 T5 offenbart ein Verfahren und eine Vorrichtung zur Ratterunterdrückung bei Arbeitsmaschinen. Die JP 2010-23162 betrifft ein Verfahren und eine Vorrichtung zur Unterdrückung von Ratterschwingungen, die beim Schneiden durch eine Werkzeugmaschine erzeugt werden.

Die vorliegende Erfindung hat die Aufgabe, ein Verfahren zum Betreiben einer Werkstückbearbeitungsanlage sowie eine Werkstückbearbeitungsanlage bereitzustellen, mit denen Werkstücke mit noch höherer Prozesssicherheit bezüglich der Schnittqualität und Genauigkeit als bisher bearbeitet werden können.

Diese Aufgabe wird erfindungsgemäß gelöst durch ein Verfahren sowie eine Werkstückbearbeitungsanlage mit den Merkmalen der nebengeordneten Patentansprüche 1 und 12. Vorteilhafte Weiterbildungen der Erfindung sind in Unteransprüchen angegeben.

Bei dem erfindungsgemäßen Verfahren zum Betreiben einer Werkstückbearbeitungsanlage wird ein Werkzeug in Drehung versetzt. Ferner wird von mindestens einer Sensoreinrichtung mindestens eine Größe erfasst, welche während einer Rotation der Komponente eine Schwingung ("Betriebsschwingung") mindestens in einem Bereich der Werkstückbearbeitungsanlage charakterisiert. Die erfasste Größe wird ausgewertet. Außerdem sind folgende Schritte vorgesehen: (a) in einem ersten Betriebsmodus: Antreiben eines Werkzeugs der Werkstückbearbeitungsanlage bei unterschiedlichen Drehzahlen, (b) während Schritt a: Erfassen der Größe mittels mindestens einem Sensor, wobei die Größe ein Abstand und/oder eine Bewegung des Werkzeugs relativ zu einem Werkzeughalteabschnitt ist, bei den unterschiedlichen Drehzahlen des Werkzeugs, (c) Auswerten der erfassten Größe (zugeordnet zu der Drehzahl) mittels einer Schwingungsanalyse, insbesondere einer Frequenzanalyse, und weiter insbesondere einer Fourier-Analyse, und (d) in einem zweiten Betriebsmodus: Antreiben des Werkzeugs zur Bearbeitung eines Werkstücks abhängig vom Ergebnis der Auswertung Schritt c.

Eine erfindungsgemäße Werkstückbearbeitungsanlage umfasst einen Antrieb, ein vom Antrieb in Drehung versetzbares Werkzeug, beispielsweise ein Sägeblatt, einen Fräser oder einen Bohrer und einen Werkzeughalteabschnitt der das Werkzeug trägt. Ferner umfasst sie mindestens eine Sensoreinrichtung zur Erfassung mindestens einer Größe, welche eine Schwingung mindestens in einem Bereich der Werkstückbearbeitungsanlage charakterisiert und ein Abstand und/oder eine Bewegung des Werkzeugs relativ zu dem Werkzeughalteabschnitt ist, und wobei die Sensoreinrichtung mindestens einen Sensor aufweist, der an dem Werkzeughalteabschnitt befestigt ist und der so ausgebildet ist, dass er den Abstand und/oder die Bewegung des Werkzeugs relativ zu dem Werkzeughalteabschnitt erfassen kann.

Vorgesehen ist auch eine Steuer- und Regeleinrichtung, welche mindestens einen Prozessor und einen Speicher aufweist. Die erfindungsgemäße Werkstückbearbeitungsanlage ist zur Ausführung eines Verfahrens der obigen Art ausgebildet.

Ein Sensor der gerade genannten Art kann beispielsweise ein Näherungssensor oder ein Entfernungssensor sein, der eine Lage beispielsweise eines Kreissägeblattes orthogonal zur Ebene des Kreissägeblattes erfasst. Es werden also direkt die Schwingungen des Werkzeugs und nicht vom Werkzeug verursachte Strukturschwingungen erfasst.

Erfindungsgemäß wurde erkannt, dass die Genauigkeit und die Schnittqualität bei der Bearbeitung insbesondere eines plattenförmigen Werkstücks mit einem sich drehenden Werkzeug auch durch Schwingungen beeinflusst wird, die durch sich drehende Komponenten der Werkstückbearbeitungsanlage, und hier insbesondere das Werkzeug, hervorgerufen werden. Daher ist bei der Erfindung vorgesehen, zunächst in einem ersten Betriebsmodus, in dem das Werkzeug vorzugsweise leer läuft (also kein Werkstück bearbeitet), das Werkzeug mit unterschiedlichen Drehzahlen anzutreiben und während dessen an einer Stelle oder an mehreren Stellen der Werkstückbearbeitungsanlage die dort auftretenden Schwingungen oder eine diese charakterisierende Größe zu erfassen bzw. zu ermitteln. Besonders günstig ist es, wenn die Schwingungen möglichst nahe am Werkzeug erfasst werden.

Auf der Basis der unterschiedlichen Drehzahlen und der erfassten Schwingungseigenschaften (insbesondere Frequenz und Amplitude) wird dann eine Schwingungsanalyse, beispielsweise in Form einer Fourier-Analyse, durchgeführt. Aus dieser ergeben sich Hinweise darauf, wie das Werkzeug so angetrieben werden kann, dass die auftretenden Schwingungen - insbesondere deren Amplitude - zumindest nicht maximal sind. Geringere Schwingungen führen zu einem stabilen Zerspanungsprozess beziehungsweise zu geringeren Abweichungen der Istposition des Werkzeugs von einer Sollposition des Werkzeugs, wodurch die Genauigkeit bei der Bearbeitung des Werkstücks verbessert wird. Auch wird die Bearbeitungsqualität des Werkstücks verbessert. Im Falle einer Plattenaufteilsäge beispielsweise wird die Schnittqualität verbessert, indem die Welligkeit des Schnitts verringert wird, und es wird auch die Kantenqualität verbessert, indem weniger Ausreißer erzeugt werden.

Darüber hinaus wird durch den erfindungsgemäß möglichen Betrieb der Werkstückbearbeitungsanlage derart, dass starke Schwingungen mit großen Amplituden vermieden werden, das Betriebsgeräusch der Werkstückbearbeitungsanlage gesenkt, was nicht nur den Komfort erhöht, sondern auch gesundheitliche Vorteile für eine Bedienperson hat. Ferner wird der Verschleiß beispielsweise an Lagern des Werkzeugs, des Antriebs, etc. vermindert, wodurch die Lebensdauer der Werkstückbearbeitungsanlage verbessert und Instandhaltungskosten gesenkt werden. Auch der Verschleiß am Werkzeug selbst kann vermindert werden, so dass dieses länger eingesetzt werden kann, was ebenfalls die Betriebskosten der Werkstückbearbeitungsanlage reduziert. Auch kann bei sehr starken Werkzeugschwingungen ein Warnhinweis ausgegeben werden, so dass eine vorbeugende Instandhaltung oder ein Werkzeugwechsel ermöglicht wird.

In einer Weiterbildung wird vorgeschlagen, dass im Schritt a das Werkzeug nur in einem Drehzahlbereich betrieben wird und/oder im Schritt b die Größe nur in einem Drehzahlbereich erfasst wird und/oder im Schritt c die Schwingungsanalyse nur für einen Drehzahlbereich durchgeführt wird, welcher Drehzahlbereich ein Solldrehzahlbereich für das verwendete Werkzeug und/oder das zu bearbeitende Werkstück ist. Hierdurch wird in den jeweiligen Verfahrensschritten Zeit und/oder Rechenkapazität eingespart.

Eine Weiterbildung des Verfahrens sieht vor, dass im Schritt c mindestens eine Drehzahl oder ein Drehzahlbereich und mindestens eine Frequenz oder ein Frequenzbereich ermittelt werden, bei denen eine Schwingungsamplitude mindestens ein relatives Maximum aufweist. Auf diese Weise wird ganz direkt jene Drehzahl oder jener Drehzahlbereich ermittelt, welche bzw. welcher für den normalen Betrieb der Werkstückbearbeitungsanlage weniger günstig ist und der daher eher vermieden werden soll. Dies vereinfacht die nachfolgenden und hiervon abhängigen Verfahrensschritte. Es versteht sich, dass bei der Schwingungsanalyse auch eine Mehrzahl von Drehzahlen oder Drehzahlbereichen ermittelt werden kann, in denen jeweils ein relatives Maximum der Schwingungsamplitude(n) vorliegt und die dann im normalen Betrieb zu vermieden sind.

Eine nochmalige Weiterbildung des erfindungsgemäßen Verfahrens zeichnet sich dadurch aus, dass die ermittelte Drehzahl oder der ermittelte Drehzahlbereich mit einer Standard-Solldrehzahl des Werkzeugs in dem zweiten Betriebsmodus verglichen wird, und dass abhängig von dem Ergebnis des Vergleichs eine Aktion erfolgt. Die Standard-Solldrehzahl kann entweder von einer Bedienperson an einer Eingabeeinrichtung, beispielsweise einem Bedienterminal, manuell vorgegeben werden für das spezifisch zum Einsatz kommende Werkzeug und gegebenenfalls auch unter Berücksichtigung des zu bearbeitenden Werkstoffes.

Alternativ kann, in einer einfacheren bevorzugten Ausführungsform, im Schritt c in einem Solldrehzahlbereich für das verwendete Werkzeug und/oder das zu bearbeitende Werkstück mindestens eine Drehzahl oder ein Drehzahlbereich und mindestens eine Frequenz oder ein Frequenzbereich ermittelt werden, bei denen eine Schwingungsamplitude mindestens ein relatives Minimum aufweist.

Die Standard-Solldrehzahl kann auch beispielsweise automatisch mittels einer automatischen Werkzeugerkennung und gegebenenfalls auch mittels einer automatischen Werkstofferkennung vorgegeben werden. Auch eine Vorgabe durch von einem Produktionssystem zugesteuerte Daten, die beispielsweise den Schnittplan, den zu bearbeitenden Werkstoff und gewisse Prozessparameter betreffen, ist möglich. Der Vorteil der genannten Weiterbildung des erfindungsgemäßen Verfahrens besteht vor allem darin, dass diese Ausführung des Verfahrens sehr einfach programmiert und daher realisiert werden kann.

Eine weitere Weiterbildung beschäftigt sich mit der vorgenannten Aktion. Vorgeschlagen wird, dass dann, wenn die Standard-Solldrehzahl mit der ermittelten Drehzahl übereinstimmt oder in dem ermittelten Drehzahlbereich liegt, eine Solldrehzahl des Werkzeugs in dem zweiten Betriebsmodus bestimmt wird, welche nicht mit der ermittelten Drehzahl übereinstimmt oder gerade außerhalb des ermittelten Drehzahlbereichs liegt. Dabei geht man davon aus, dass eine optimale Bearbeitung eines Werkstücks nicht nur bei einer ganz bestimmten diskreten Drehzahl des Werkzeugs, sondern innerhalb eines Drehzahlbereichs des Werkzeugs möglich ist. Mit der hier genannten Weiterbildung wird eine Auswahl einer Solldrehzahl innerhalb eines solchen zur Verfügung stehenden Drehzahlbereichs getroffen, bei welcher Solldrehzahl die Schwingungsamplituden eher gering sind, bei der also keine oder nur vergleichsweise geringe Resonanzen am Werkzeug und/oder beispielsweise an einer Maschinenstruktur auftreten. In der Praxis kann eine solche neue Solldrehzahl beispielsweise dadurch ermittelt werden, dass die Ausgangs-Solldrehzahl in diskreten Schritten verringert oder erhöht und die jeweils verringerte bzw. erhöhte Solldrehzahl mit der ermittelten und zu vermeidenden Drehzahl oder dem ermittelten und zu vermeidenden Drehzahlbereich, in dem besonders hohe Schwingungsamplituden auftreten, verglichen wird. Sobald die verringerte bzw. erhöhte Solldrehzahl außerhalb des ermittelten und zu vermeidenden Drehzahlbereichs liegt, wird diese neue verringerte oder erhöhte Solldrehzahl zur Drehzahlregelung des Werkzeugs verwendet. Diese vorgeschlagene Weiterbildung ist ebenfalls leicht programmierbar und arbeitet zuverlässig.

Besonders vorteilhaft ist es, wenn das Verfahren mindestens nach einem Wechsel des Werkzeugs durchgeführt wird. Nach einem Wechsel des Werkzeugs können sich je nach Werkzeugqualität (beispielsweise Werkzeugsteifigkeit und/oder Werkzeugspannungszustand) sowie Verschleiß des vorhergehenden Werkzeugs starke Veränderungen der Zusammenhänge zwischen Drehzahl, Schwingungsfrequenzen und Schwingungsamplituden ergeben, so das das erfindungsgemäße Verfahren hier besonders sinnvoll ist.

Bestimmte Werkzeuge können von vornherein eine konstruktionsbedingte Inhomogenität ihrer Masse bzw. ihrer Massenverteilung relativ zur Drehachse aufweisen. Diese konstruktionsbedingte inhomogene Massenverteilung kann als konstruktionsbedingte Unwucht akzeptiert werden. Eine solche konstruktionsbedingte Inhomogenität kann das Messergebnis beispielsweise dann, wenn mittels eines induktiven Messverfahrens gemessen wird, beeinflussen. Dies wird auf sehr einfache Art und Weise dadurch erreicht, dass im Schritt c ein durch eine Inhomogenität hervorgerufener Störeinfluss beziehungsweise Messfehler mittels mindestens eines Filters eliminiert oder zumindest reduziert wird.

Vorgeschlagen wird auch, dass die im Schritt c erfasste Größe mit einem Grenzwert verglichen wird, und dass abhängig vom Ergebnis des Vergleichs eine Aktion erfolgt. Die Aktion kann beispielsweise in einem Werkzeugwechsel, einer Änderung der Vorschubgeschwindigkeit, und/oder der Ausgabe eines Warnhinweises bestehen. Auf diese Weise wird der Betrieb der erfindungsgemäßen Werkstückbearbeitungsanlage auf sehr einfache Art und Weise nochmals zuverlässiger gemacht, und es wird die Bearbeitungsqualität verbessert.

Eine nochmalige Ausgestaltung des erfindungsgemäßen Verfahrens sieht vor, dass mittels der Schwingungsanalyse im Schritt c mindestens eine zweite Eigenfrequenz und vorzugsweise auch eine dritte Eigenfrequenz ermittelt wird, und dass aus der zweiten Eigenfrequenz bzw. der zweiten und der dritten Eigenfrequenz sowie über ihre Veränderung in der Abhängigkeit von der Drehzahl auf einen Werkzeugzustand (beispielsweise Werkzeugsteifigkeit, Werkzeugspannungszustand, dynamische Eigenschaften) geschlossen wird. Da die Bearbeitungsqualität von diesen oben genannten Eigenschaften abhängig ist, kann anhand der gesammelten Erfahrungswerte gleich nach dem Werkzeugwechsel und nach der Messung eine Prognose bezüglich der zu erwartenden Bearbeitungsqualität abgegeben werden und/oder kann die Werkzeugqualität beurteilt werden. Somit kann sehr einfach, ohne Durchführung eines Bearbeitungsvorgangs und ohne eine Sichtinspektion, der aktuelle Werkzeugzustand ermittelt werden, so dass beispielsweise ein Werkzeugwechsel zum richtigen Zeitpunkt durchgeführt werden kann.

Eine Weiterbildung der erfindungsgemäß vorgesehenen Werkstückbearbeitungsanlage sieht vor, dass sie eine stationäre erste Tragstruktur und eine gegenüber dieser mindestens translatorisch bewegbare zweite Tragstruktur aufweist, wobei das Werkzeug an der zweiten Tragstruktur angeordnet ist, und dass die Sensoreinrichtung mindestens einen mit der ersten Tragstruktur gekoppelten Beschleunigungssensor und/oder mindestens einen mit der zweiten Tragstruktur gekoppelten Beschleunigungssensor aufweist. Die angegebenen Arten von Sensoren und die angegebenen Anordnungen der Sensoren gestatten eine zuverlässige und aussagekräftige Erfassung von Schwingungen an der Werkstückbearbeitungsanlage für die Durchführung des oben genannten Verfahrens.

Eine nochmalige Weiterbildung der erfindungsgemäßen Werkstückbearbeitungsanlage zeichnet sich dadurch aus, dass sie als Plattenbearbeitungsanlage, insbesondere als Plattenaufteilsäge ausgebildet ist. Hier sind die Vorteile der Erfindung besonders nützlich.

Ferner wird vorgeschlagen, dass die Sensoreinrichtung mindestens einen Sensor umfasst, der so ausgebildet ist, dass er Schall in einem Bearbeitungsbereich erfassen kann. Der auf diese Weise ermittelte Schall kann mit einem Schallspektrum verglichen werden, und hieraus können ebenfalls Rückschlüsse im Hinblick auf einen optimalen Betrieb der Werkstückbearbeitungsanlage und/oder auf Werkzeugeigenschaften getroffen werden.

Nachfolgend wird eine mögliche Ausführungsform der Erfindung unter Bezugnahme auf die Zeichnung erläutert. In der Zeichnung zeigen:
- Figur 1: eine Draufsicht auf eine erfindungsgemäße Werkstückbearbeitungsanlage in Form einer Plattenaufteilsäge;
- Figur 2: eine teilweise geschnittene Ansicht von vorne längs eines Pfeiles II von Figur 1 auf einen Sägewagen der Plattenaufteilsäge mit einer Hauptsäge und einer Vorritzsäge;
- Figur 3: eine Ansicht von oben auf den Sägewagen von Figur 2;
- Figur 4: ein dreidimensionales Diagramm, welches das Ergebnis einer Schwingungsanalyse der Plattenaufteilsäge der Figuren 1 und 2 zeigt, wobei eine Schwingungsamplitude über einer Drehzahl der Hauptsäge und einer Schwingungsfrequenz aufgetragen ist, für einen ersten Anwendungsfall;
- Figur 5: ein zweidimensionales Diagramm eines Teilbereichs des Diagramms von Figur 4, wobei eine Drehzahl über einer Schwingungsfrequenz aufgetragen ist, und wobei Bereiche mit erhöhten Schwingungsamplituden durch Ellipsoide dargestellt sind;
- Figur 6: ein in einem rechten Bereich erweitertes Diagramm ähnlich zu Figur 5;
- Figur 7: ein Diagramm ähnlich zu Figur 5, für einen zweiten Anwendungsfall;
- Figur 8: ein Diagramm ähnlich zu Figur 5, für einen dritten Anwendungsfall; und
- Figur 9: ein Flussdiagramm eines Verfahrens zum Betreiben der Plattenaufteilsäge von Figur 1.

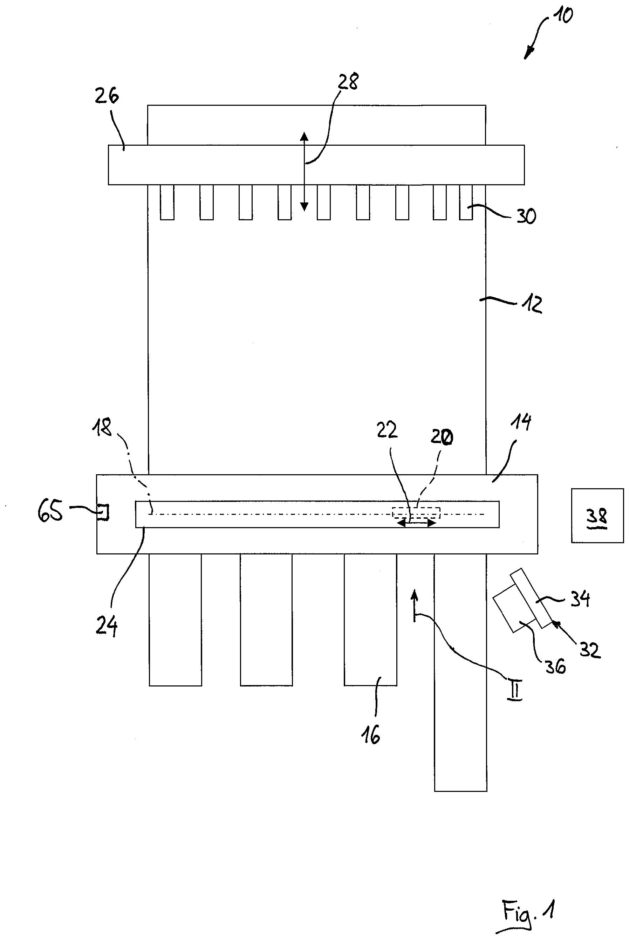

In Figur 1 trägt eine Werkstückbearbeitungsanlage insgesamt das Bezugszeichen 10. Sie ist vorliegend ganz allgemein als Plattenbearbeitungsanlage und insbesondere als Plattenaufteilsäge ausgebildet, mit der großformatige plattenförmige Werkstücke oder Werkstückstapel durch Sägevorgänge in kleinere Werkstücke aufgeteilt werden können. In anderen Ausführungsformen ist die Plattenbearbeitungsanlage nicht als Plattenaufteilsäge sondern als Fräseinrichtung und/oder als Bohreinrichtung zum Bearbeiten plattenförmiger Werkstücke ausgebildet. Derartige Anlagen werden auch als "Nestinganlagen" bezeichnet. Bei anderen Ausführungsformen können auch andere Werkstücke bearbeitet werden, welche nicht plattenförmig sind, beispielsweise längliche Werkstücke. Außerdem sind auch beliebige Kombinationen der genannten Typen von Werkstückbearbeitungsanlagen möglich.

Die Plattenaufteilsäge 10 umfasst einen Zuführtisch 12, der üblicherweise als Rollentisch ausgebildet ist. An den Zuführtisch 12 schließt sich ein Maschinentisch 14 an, der eine stationäre erste Tragstruktur bildet, und an diesen schließt sich wieder ein Entnahmetisch 16 an, der aus vier voneinander separaten Segmenten (ohne Bezugszeichen) besteht. Der Maschinentisch 14 und der Entnahmetisch 16 sind als bevorzugt Luftkissentische ausgebildet.

In dem Maschinentisch 14 ist ein durch eine strichpunktierte Linie 18 angedeuteter Sägespalt vorhanden, der einen Bearbeitungsbereich definiert. Unterhalb von diesem ist ein Sägewagen 20 angeordnet, der entsprechend dem Doppelpfeil 22 bewegt werden kann, und der somit eine translatorisch bewegbare zweite Tragstruktur bildet. Der Sägewagen 20 wird weiter unten noch stärker im Detail beschrieben werden. Oberhalb von dem Maschinentisch 14 ist ein Druckbalken 24 angeordnet. Dieser kann senkrecht zur Zeichnungsebene der Figur 1 bewegt werden. Im Bereich des Zuführtisches 12 ist ein Programmschieber 26 angeordnet, der entsprechend einem Doppelpfeil 28 bewegt werden kann. An dem Programmschieber 26 sind wiederum mehrere Spannzangen 30 befestigt, von denen aus Gründen der Übersichtlichkeit in Figur 1 nur eine mit einem Bezugszeichen versehen ist.

Zu der Plattenaufteilsäge 10 gehört ferner ein Bedienterminal 32, das vorliegend durch einen Bildschirm 34 und eine Tastatur 36 gebildet wird, sowie eine Steuer- und Regeleinrichtung 38, die nur symbolisch durch ein Quadrat angedeutet ist. Die Steuer- und Regeleinrichtung 38 steuert und regelt den Betrieb der Plattenaufteilsäge 10. Hierzu erhält sie Signale von verschiedenen Sensoren. Bestimmte dieser Sensoren werden weiter unten noch stärker im Detail erläutert werden. Angesteuert werden von der Steuer- und Regeleinrichtung insbesondere der Programmschieber 26, die Spannzangen 30, der Sägewagen 20 mit den darauf befindlichen Sägen (in Figur 1 nicht dargestellt) und der Druckbalken 24.

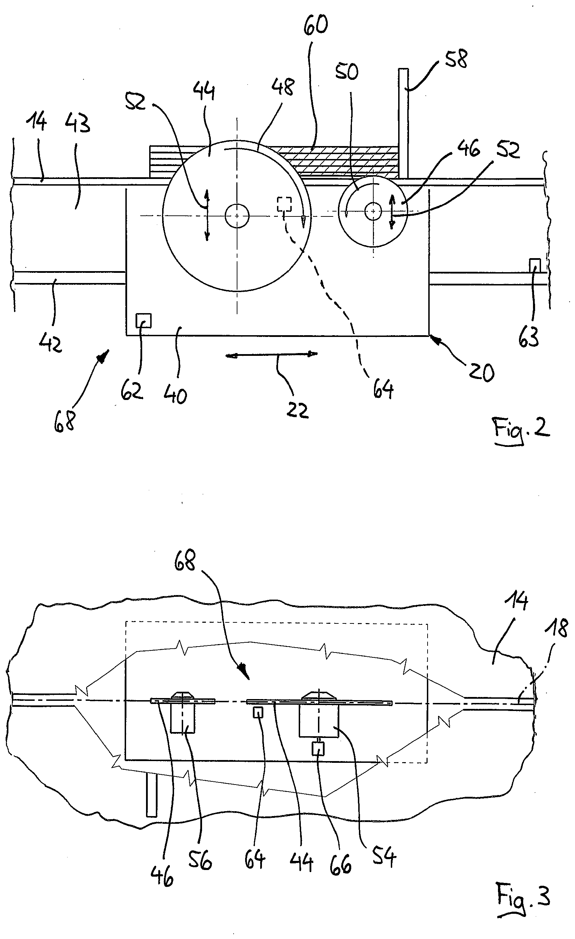

Der Sägewagen 20 sowie Teile des Maschinentisches 14 sind in den Figuren 2 und 3 etwas stärker detailliert gezeigt. Der Sägewagen 20 umfasst einen Werkzeughalteabschnitt 40, der mittels eines nicht gezeigten Antriebsmotors auf Schienen 42, die an einem Führungsträger 43, der eine Stützstruktur des Maschinentisches 14 bildet, befestigt sind, gemäß des Doppelpfeils 22 bewegbar ist. Der Werkzeughalteabschnitt 40 trägt zwei rotierende Werkzeuge in Form eines Hauptsägeblattes 44 und eines Vorritzsägeblattes 46. Das Hauptsägeblatt 44 und das Vorritzsägeblatt 46 rotieren im Betrieb gegenläufig entsprechend der Pfeile 48 und 50. Sie sind darüber hinaus in vertikaler Richtung entsprechend der Doppelpfeile 52 bewegbar. Die beiden Antriebe für das Hauptsägeblatt 44 und das Vorritzsägeblatt 46 tragen in Figur 3 Bezugszeichen 54 und 56. Zu dem Sägewagen 20 gehört auch noch ein ausfahrbarer Anschlag 58 zum Ausrichten eines in Figur 2 gezeigten Werkstückstapels 60.

In einem normalen Betrieb (diese wird nachfolgend noch als "zweiter Betriebsmodus" bezeichnet werden) wird der Werkstückstapel 60 an einem in Zuführrichtung hinteren Rand von den Spannzangen 30 des Programmschiebers 26 ergriffen und durch eine Bewegung des Programmschiebers 26 sukzessive dem Maschinentisch 14 bzw. dem Sägewagen 20 zugeführt, wo er durch eine Bewegung des Sägewagens 20 gemäß dem Doppelpfeil 22 durch einen Vorschnitt mittels des Vorritzsägeblatts 46 und einen anschließenden Hauptschnitt mittels des Hauptsägeblatts 44 aufgeteilt wird. Während der Bearbeitung durch das Hauptsägeblatt 44 und das Vorritzsägeblatt 46 wird der Werkstückstapel 60 durch den Druckbalken 24 gegen den Maschinentisch 14 gedrückt und hierdurch festgelegt. Eine Bedienperson kann die aufgeteilten Werkstücke am Entnahmetisch 16 entnehmen.

Aus Figur 2 ist ersichtlich, dass an dem Werkzeughalteabschnitt 40 des Sägewagens 20 ein Schwingungssensor 62 befestigt ist. Bei diesem kann es sich beispielsweise um einen Beschleunigungssensor handeln. Ferner ist am Werkzeughalteabschnitt 40 noch ein berührungslos arbeitender Abstandssensor 64 befestigt. Mit dem Beschleunigungssensor 62 ist es möglich, Schwingungen des Werkzeughalteabschnitt 40, insbesondere deren Frequenz und Amplitude, in der Ebene des Werkzeughalteabschnitt 40 zu erfassen bzw. aus dem Signal zu ermitteln. Mit dem Abstandssensor 64 ist es möglich, einen Abstand des Hauptsägeblatts 44 relativ zum Werkzeughalteabschnitt 40 zu erfassen. Ein weiterer Beschleunigungssensor 63 kann an der Maschinenstruktur beispielsweise an dem Führungsträger 43 befestigt werden. Für eine indirekte Schwingungsmessung kann ferner ein weiterer Sensor in Form eines Mikrofons 65 (siehe Figur 1) verwendet werden, mit dem Schall im Bereich des Bearbeitungsbereichs (also des Sägespalts 18 bzw. des Sägewagens 20) erfasst werden kann. Das Mikrofon 65 kann auch auf dem Sägewagen 20 angeordnet sein.

Aus Figur 3 ist ersichtlich, dass am Antrieb 54 des Hauptsägeblatts 44 ein weiterer Beschleunigungssensor 66 befestigt ist, mit dem Schwingungen (wiederum insbesondere Frequenz und Amplitude) des Antriebs 54 und somit auch des Werkzeughalteabschnitt 40 senkrecht zur Ebene des Werkzeughalteabschnitt 40 (bzw. bezogen auf eine Drehachse des Hauptsägeblattes 44 in axialer Richtung) erfasst bzw. aus dem Signal ermittelt werden können. Die Beschleunigungssensoren 62, 63 und 66 sowie der Abstandssensor 64 gehören insgesamt zu einer Sensoreinrichtung 68. Sie liefern ihre Signale an die Steuer- und Regeleinrichtung 38.

Schwingungen des Werkzeughalteabschnitts 40 werden im Betrieb der Plattenaufteilsäge 10 durch die rotierenden Werkzeuge, also bei der hier im Detail beschriebenen Ausführungsform durch das Hauptsägeblatt 44 und das Vorritzsägeblatt 46, sowie durch sonstige rotierende Teile der Plattenaufteilsäge 10 erzeugt. Zu diesen sonstigen rotierenden Teilen gehören beispielsweise Antriebe 54 und 56 sowie zugehörige, jedoch nicht gezeigte Riemenscheiben, etc. Sowohl das Frequenzspektrum der Schwingungen als auch die zugehörigen Schwingungsamplituden hängen dabei von den Drehzahlen der rotierenden Werkzeuge 44, 46 sowie den einzelnen Drehzahlen der sonstigen rotierenden Teile ab.

Für eine entsprechende Schwingungsanalyse, beispielsweise in Form einer Frequenzanalyse, und hier beispielsweise in Form einer Fourier-Analyse, verfügt die Steuer- und Regeleinrichtung 38 über mindestens einen Prozessor und mindestens einen Speicher, die beide nicht dargestellt sind. Auf dem Speicher ist ein Computerprogramm gespeichert, welches unter anderem zur Ausführung einer solchen Schwingungsanalyse mittels des Prozessors programmiert ist. Weitere auf dem Speicher gespeicherte Computerprogramme sind zur Ausführung weiterer Verfahrensschritte programmiert, welche zum Betreiben der Plattenaufteilsäge 10 dienen.

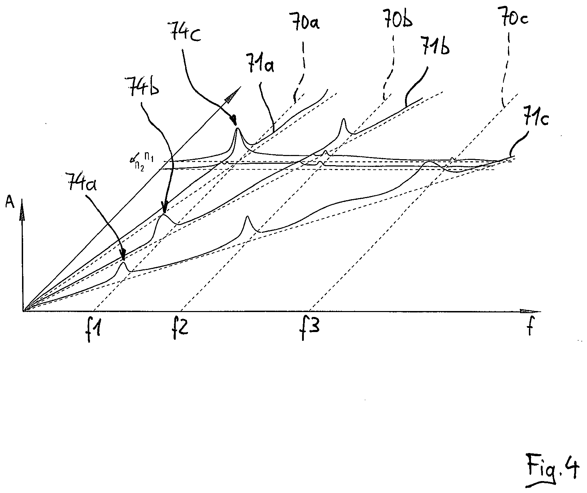

Figur 4 zeigt mittels eines dreidimensionalen Diagramms das Ergebnis einer Schwingungsanalyse für einen ersten Anwendungsfall in Form eines Kennfeldes. Dieser erste Anwendungsfall ist durch einen ganz bestimmten Typ und eine ganz bestimmte Ausführung des Hauptsägeblatts 44 gekennzeichnet. In dem Diagramm der Figur 4 ist eine Schwingungsamplitude A über einer Drehzahl n und einer Schwingungsfrequenz f des Hauptsägeblatts 44 aufgetragen.

f1 ist eine erste Eigenfrequenz einer Maschinenstruktur ("Strukturschwingungen"), die beispielsweise den Maschinentisch 14, die Schienen 42 und den Werkzeughalteabschnitt 40 umfasst. f2 ist eine zweite Eigenfrequenz, f3 eine dritte Eigenfrequenz. Die besagten Eigenfrequenzen f1, f2 und f3 sind durch entsprechende gestrichelte Linien 70a, 70b und 70c in der f-n-Ebene gezeichnet.

Das Ziel der Schwingungsanalyse ist es, aus den Signalen der Sensoreinrichtung 68 Schwingungen insbesondere am Hauptsägeblatt 44 zu ermitteln und, wie nachfolgend noch dargelegt werden wird, zu minimieren. Dabei wird berücksichtigt, dass die Schwingungen am Hauptsägeblatt 44 die Summe der Schwingungen der Maschinenstruktur (Strukturschwingungen) und der sich aus dem dynamischen Verhalten des Werkzeugs 44 ergebenden Schwingungen des Werkzeugs 44 selbst sind.

In Figur 4 erkennt man ferner drei vom Koordinatenmittelpunkt ausgehende diagonale Kurvenlinien 71a, 71b und 71c. Diese kennzeichnen Schwingungen, die durch verschiedene rotierende Bauteile der Plattenaufteilsäge 10 verursacht werden. Zu diesen Bauteilen gehören beispielsweise die Läufer der elektrischen Antriebe 54 und 56, gegebenenfalls zwischen den Antrieben 54 und 56 und dem Hauptsägeblatt 44 und dem Vorritzsägeblatt 46 vorhandene Riemenscheiben, Kühlventilatoren, etc. Jede der drei diagonalen Kurvenlinien 71a, 71b und 71c gibt dabei die im allgemeinen durch eine vorhandene Unwucht hervorgerufene drehzahlabhängige Schwingung einer solchen Komponente wieder. Man erkennt, dass dort, wo eine der Kurvenlinien 71a, 71b und 71c eine in der Eigenfrequenz-Linien 70a, 70b und 70c schneidet, sich eine erhöhte Schwingungsamplitude A ergibt, diese also an dieser Stelle ein resonanzbedingtes relatives Maximum aufweist. Die entsprechenden Bereiche (Resonanzbereiche) der maximalen Schwingungsamplitude A sind beispielhaft für die erste Eigenfrequenz f1 mit 74a, 74b und 74c bezeichnet.

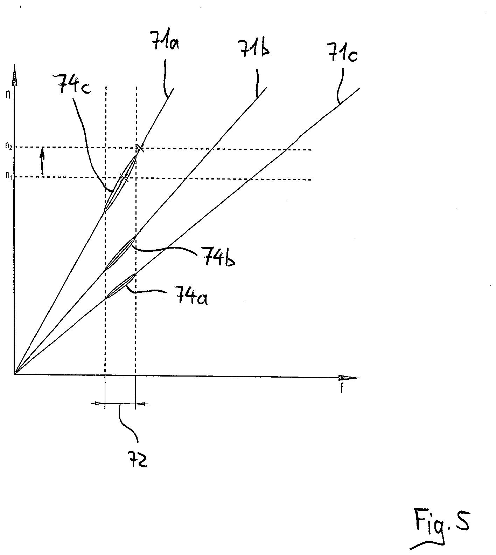

Figur 5 ist ein Diagramm, welches den gleichen ersten Anwendungsfall zeigt wie Figur 4, jedoch nur ein zweidimensionales Diagramm ist, bei dem die Höhe der Schwingungsamplitude A in einem Resonanzbereich durch die Breite eines dort gezeichneten Ellipsoides ausgedrückt ist. Ferner ist in Figur 5 nur der Bereich der ersten Eigenfrequenz f1 der Strukturschwingungen gezeigt, welcher dort durch das Bezugszeichen 72 bezeichnet ist. Man erkennt, dass bei diesem zweiten Anwendungsfall die Standard-Solldrehzahl n1 zunächst im Resonanzbereich 74c lag. Durch Erhöhen der Standard-Solldrehzahl n1 auf eine Solldrehzahl n2 wird der Resonanzbereich 74c verlassen.

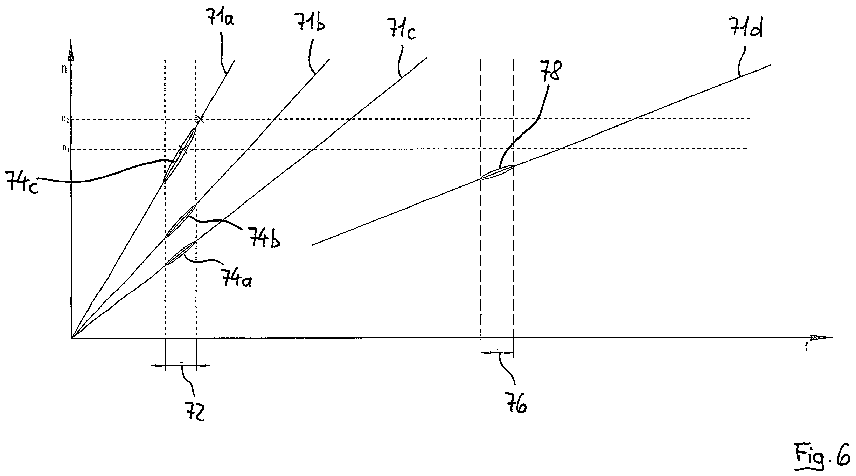

Figur 6 ist ein Diagramm, welches den gleichen ersten Anwendungsfall zeigt wie die Diagramme 4 und 5, welches jedoch nach rechts hin erweitert ist. Mit dem Bezugszeichen 72 ist wiederum der erste Frequenzbereich bezeichnet, der ein Eigenfrequenzbereich der Maschinenstruktur ist. In diesem ersten Eigenfrequenzbereich 72 kommt es in drei Drehzahlbereichen zu Resonanzen. Die entsprechenden Ellipsoide sind wiederum mit 74a, 74b und 74c bezeichnet. Im rechten Bereich des Diagramms der Figur 6 ist mit dem Bezugszeichen 76 ein zweiter Frequenzbereich bezeichnet, der ein erster Eigenfrequenzbereich des Hauptsägeblattes 44 ist. Dieser liegt auf einer diagonalen Linie 71d , welche die spezifischen Schwingungen des Hauptsägeblatts 44 wiedergibt.

In dem Eigenfrequenzbereich 76 gibt es einen diskreten Drehzahlbereich, in dem es zu einer Resonanz kommt. Der entsprechende Ellipsoid ist in Figur 6 mit 78 bezeichnet. Man erkennt, dass der Frequenzbereich 76 der Eigenfrequenz des Hauptsägeblatts 44 weit von dem Frequenzbereich 72 der Eigenfrequenz der Maschinenstruktur entfernt ist. Das Risiko einer Verstärkung der Resonanzen der Maschinenstruktur durch die Resonanz des Hauptsägeblatts 44 ist somit gering. Der dargestellte Anwendungsfall ist also der Fall eines "guten" Hauptsägeblatts 44.

Ähnlich wie in Figur 5 erkennt man aus Figur 6, dass eine Standard-Solldrehzahl n1 zunächst im Resonanzbereich 74c lag. Durch eine geringe Erhöhung auf eine Solldrehzahl n2 des Hauptsägeblatts 44 kann der Ellipsoid 74c und somit der entsprechende Resonanzbereich 72 verlassen werden.

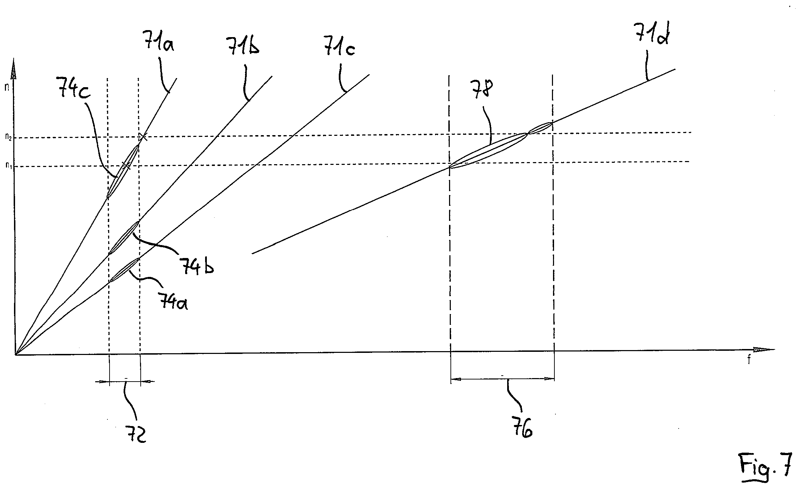

Figur 7 ist wiederum ähnlich zu Figur 6. Der hier gezeigte zweite Anwendungsfall betrifft jedoch ein Werkzeug, welches zwar noch "brauchbar", jedoch nicht mehr so gut wie in dem Anwendungsfall der Figur 6 ist. Dies erkennt man daran, dass der Frequenzbereich der Eigenfrequenz des Werkzeugs, der in Figur 7 wiederum das Bezugszeichen 76 trägt, deutlich größer ist als in Figur 6, und dass auch der Ellipsoid 78 eine größere Breite hat, was auf eine größere Amplitude hinweist.

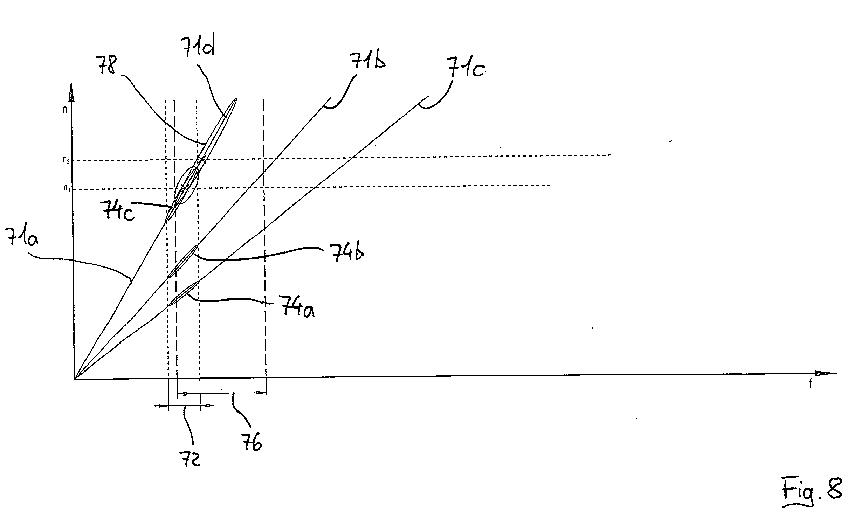

Figur 8 zeigt einen dritten Anwendungsfall eines relativ schlechten Werkzeugs. Hier überschneidet sich der Frequenzbereich 76 der Eigenfrequenz des Hauptsägeblatts 44 teilweise mit dem Frequenzbereich 72 der Eigenfrequenz der Maschinenstruktur. Entsprechend ergibt sich ein Resonanzbereich 74c der Eigenfrequenz der Maschinenstruktur, der mit dem Resonanzbereich 78 des Hauptsägeblatts 44 teilweise zusammenfällt und dort zu einer besonders großen Schwingungsamplitude A (große Breite des Ellipsoides) führt. Der Resonanzbereich 78 erstreckt sich über ein solch großen Drehzahlbereich, dass auch durch eine Erhöhung der Standard-Solldrehzahl von einem Wert n1 auf eine Solldrehzahl mit dem Wert n2 der Resonanzbereich 78 nicht verlassen werden kann.

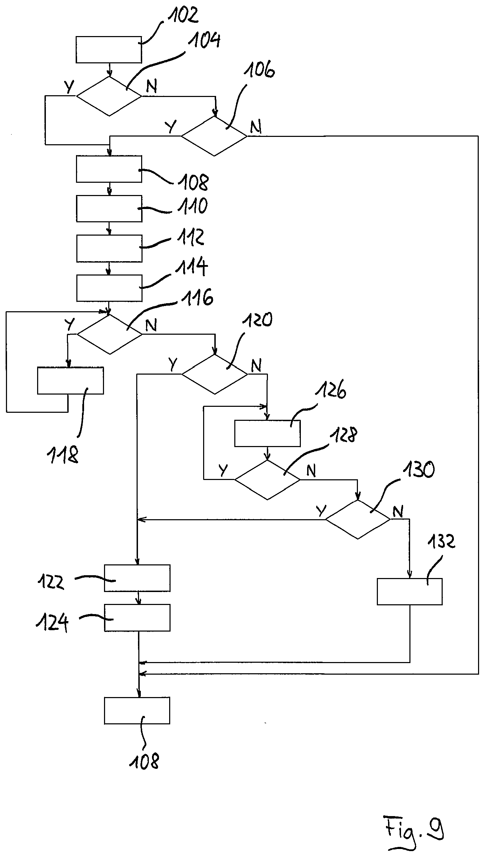

Nun wird ein Verfahren zum Betreiben der Plattenaufteilsäge 10 unter Bezugnahme auf das Flussdiagramm in Figur 9 erläutert. Dieses Verfahren ist, wie bereits oben erwähnt wurde, als Computerprogramm auf einem Speicher der Steuer- und Regeleinrichtung 38 abgespeichert. Es versteht sich, dass dieses Verfahren nicht nur bei der dargestellten Plattenaufteilsäge 10 angewendet werden kann, sondern auch bei ganz anderen Plattenbearbeitungsanlagen mit anderen Arten von Werkzeugen oder bei Plattenaufteilsägen mit zusätzlichen Werkzeugen.

Das Verfahren beginnt in einem Startblock 102. In 104 wird abgefragt, ob ein Wechsel des Werkzeugs, also vorliegend des Hauptsägeblatts 44, stattgefunden hat. Ist die Antwort Nein (N), wird in 106 abgefragt, ob seit der letzten Inbetriebnahme eine bestimmte Anzahl von Betriebsstunden erreicht wurde. Ist die Antwort wiederum Nein (N), erfolgt ein Sprung zu einem Endblock 108. In diesem Fall endet das Verfahren also bereits, ohne dass eine Schwingungsanalyse durchgeführt wird.

Ist entweder im Entscheidungsblock 104 oder im Entscheidungsblock 106 die Antwort ja (Y), wird die Plattenaufteilsäge 10 zunächst in 108 in einem ersten Betriebsmodus betrieben. In diesem wird der Sägewagen in einer bestimmten Position zwischen seinen beiden Endstellungen positioniert, und der Antrieb 54 des Hauptsägeblatts 44 wird von der Steuer- und Regeleinrichtung 38 so angesteuert, dass das Hauptsägeblatt 44 bei unterschiedlichen Drehzahlen angetrieben wird. Vorzugsweise wird dies dadurch realisiert, dass das Hauptsägeblatt 44 aus dem Stillstand bis zu einer maximalen Drehzahl allmählich entweder kontinuierlich oder in Stufen beschleunigt wird, und zwar ohne dass ein Werkstück eingelegt ist, also ohne dass ein Werkstück bearbeitet wird.

Im Block 110 werden über die Sensoren 62, 63, 64 und 66 der Sensoreinrichtung 68 eine Schwingungsfrequenz f und eine Schwingungsamplitude A des Hauptsägeblatts 44 bei den oben erwähnten unterschiedlichen Drehzahlen erfasst bzw. mittels deren Signale in der Steuer- und Regeleinrichtung 38 ermittelt. Dabei dienen die Beschleunigungssensoren 62, 63 und 66 zur Ermittlung der Schwingungen des Werkzeughalteabschnitts 40, wohingegen der Abstandssensor 64 dazu dient, die Relativbewegung des Hauptsägeblatts 44 relativ zum Werkzeughalteabschnitt 40 zu erfassen. Hieraus kann dann letztlich das Schwingungsverhalten des Hauptsägeblatts 44 ermittelt werden.

In 112 wird eine Schwingungsanalyse, vorliegend eine Frequenzanalyse in Form einer Fourier-Analyse durchgeführt. Hieraus ergibt sich ein dreidimensionales "Kennfeld", wie es beispielsweise in Figur 4 gezeigt ist und welches die Drehzahl n, die Schwingungsamplitude A und die Schwingungsfrequenz f des Hauptsägeblatts 44 miteinander verknüpft. Bei der Durchführung der Schwingungsanalyse mittels des Abstandssensors 64 wird ein Filter eingesetzt, um einen durch eine Inhomogenität des Hauptsägeblatts 44 hervorgerufenen Störeinfluss zu eliminieren oder zumindest zu reduzieren. Eine solche Inhomogenität kann beispielsweise durch eine konstruktionsbedingte ungleiche Masseverteilung am Hauptsägeblatt 44 hervorgerufen werden. Eine derartige ungleiche Masseverteilung wiederum kann beispielsweise von Dehnungsschlitzen sowie Dämpfungselementen am Sägeblatt herrühren und führt zu einem als Vielfaches der Drehzahl auftretenden Ausschlag des Meßsignals. Durch eine drehzahlabhängige Filterung des Meßsignals werden diese periodisch auftretenden Messfehler ausgeblendet. Hierzu kann beispielsweise ein variabler Bandpassfilter eingesetzt werden. In 114 werden Drehzahlbereiche N und zugehörige Frequenzbereiche definiert, in denen die Schwingungsamplitude A mindestens ein relatives Maximum aufweist.

In einem Entscheidungsblock 116 wird der ermittelte Drehzahlbereich N mit einer Standard-Solldrehzahl n1 des Hauptsägeblatts 44 verglichen. Bei dieser Standard-Solldrehzahl n1 handelt es sich um jene Drehzahl des Hauptsägeblatts 44, welche in einem zweiten Betriebsmodus, in dem tatsächlich ein Werkstück bzw. ein Werkstückstapel gesägt wird, optimalerweise gewählt werden würde, und die meist in der Mitte eines Soll-Drehzahlbereichs Ns liegt. Ergibt die Abfrage, dass die Standard-Solldrehzahl n1 des Hauptsägeblatts 44 in dem ermittelten (und zu vermeidenden) Drehzahlbereich N liegt (Antwort Ja bzw. Y), wird in einem Block 118 die Standard-Solldrehzahl n1 um einen festen Wert D abgesenkt. Diese neue abgesenkte Solldrehzahl n2 wird dann an den Eingang des Entscheidungsblocks 116 zurückgeführt. Dieser Vorgang wird so lange durchgeführt, bis die abgesenkte Solldrehzahl n2 außerhalb von dem ermittelten und zu vermeidenden Drehzahlbereich N liegt. Dies führt im Entscheidungsblock 116 zur Antwort Nein (N).

Die Verarbeitung geht dann weiter in einem Entscheidungsblock 120. In diesem wird abgefragt, ob die (abgesenkte) Solldrehzahl n2 des Hauptsägeblatts 44 noch in dem bereits oben erwähnten Soll-Drehzahlbereich Ns liegt. Dieser Soll-Drehzahlbereich ist jener Drehzahlbereich, in dem bei dem konkret verwendeten Hauptsägeblatt 44 und dem konkret zur Verarbeitung vorgesehenen Werkstoff (also beispielsweise Holz, Laminat, Kunststoff, etc.) des Werkstücks bzw. der Werkstücke ein optimales Arbeitsergebnis erzielt wird. Ist die Antwort im Entscheidungsblock 120 Ja (Y), wird die (abgesenkte) Solldrehzahl n2 im Block 122 als Solldrehzahl des Hauptsägeblatts 44 für den eigentlichen Betrieb (zweiter Betriebsmodus) der Plattenaufteilsäge 10 festgelegt. Im Block 124 wird die Plattenaufteilsäge 10 dann in dem zweiten Betriebsmodus betrieben, es werden also plattenförmige Werkstücke aufgeteilt, wobei das Hauptsägeblatt 44 mit der im Block 122 festgelegten Solldrehzahl n2 betrieben wird.

Wird dagegen im Entscheidungsblock 120 festgestellt, dass die abgesenkte Solldrehzahl n2 nicht mehr in dem Soll-Drehzahlbereich Ns liegt, wird im Block 126 die Standard-Solldrehzahl n1 um einen festen Wert D erhöht. In einem Entscheidungsblock 128, der dem Entscheidungsblock 116 entspricht, wird dann geprüft, ob die erhöhte Solldrehzahl n2 innerhalb von dem ermittelten und zu vermeidenden Drehzahlbereich N liegt. Ist die Antwort Ja (Y), erfolgt ein Rücksprung vor den Block 126. Ist die Antwort dagegen Nein (N), bedeutet dies, dass die erhöhte Solldrehzahl n2 außerhalb von dem ermittelten Drehzahlbereich N liegt.

In diesem Fall wird nun in einem Block 130, welcher dem bereits beschriebenen Block 120 entspricht, abgefragt, ob die erhöhte Solldrehzahl n2 innerhalb von dem bereits oben erwähnten Soll-Drehzahlbereich Ns liegt. Ist die Antwort Ja (Y), erfolgt ein Sprung vor den bereits erwähnten Block 122. Ist die Antwort dagegen Nein (N), bedeutet dies, dass das Hauptsägeblatt 44 außerhalb des ermittelten und zu vermeidenden Drehzahlbereichs N nur betrieben werden kann, wenn es außerhalb jenes Soll-Drehzahlbereichs Ns betrieben wird, der für ein optimales Arbeitsergebnis wichtig oder sogar unabdingbar ist. Es erfolgt dann eine Fehlermeldung im Block 132. Diese kann beispielsweise an dem Bildschirm 34 des Bedienterminals 32 ausgegeben werden. Hierdurch erhält die Bedienperson einen Hinweis darauf, dass das Werkzeug, also das Hauptsägeblatt 44, ausgewechselt werden muss. Alternativ oder zusätzlich wäre es auch möglich, dass die im Schritt c erfasste Größe, also beispielsweise die Frequenz und/oder die Amplitude, mit einem Grenzwert verglichen wird, und dass abhängig vom Ergebnis des Vergleichs eine Aktion erfolgt. Als Aktion kann beispielsweise ebenso ein Wechsel des Werkzeugs angezeigt werden, eine Änderung der Vorschubgeschwindigkeit vorgegeben werden, und/oder ein Warnhinweis ausgegeben werden.

Bei einem nicht gezeigten, deutlich vereinfachten Verfahren wird im Schritt c in einem Solldrehzahlbereich für das verwendete Werkzeug und/oder das zu bearbeitende Werkstück mindestens eine Drehzahl oder ein Drehzahlbereich und mindestens eine Frequenz oder ein Frequenzbereich ermittelt werden, bei denen eine Schwingungsamplitude mindestens ein relatives Minimum aufweist. Diese Drehzahl bzw. dieser Drehzahlbereich werden dann im weiteren Betrieb der Werkstückbearbeitungsanlage verwendet.

Das oben unter Bezugnahme auf Figur 9 beschriebene Verfahren hat den Vorteil, dass das Hauptsägeblatt 44 in dem zweiten Betriebsmodus (normaler Betrieb) mit einer Drehzahl angetrieben wird, bei der das Betriebsgeräusch der Plattenaufteilsäge 10 relativ gering ist, eine hohe Schnittqualität (geringe Ausreißer, geringe Welligkeit) und eine hohe Schnittgenauigkeit erzielt wird, und darüber hinaus wird der Verschleiß am Hauptsägeblatt 44 sowie an weiteren Teilen der Plattenaufteilsäge 10 reduziert. Schließlich erhält die Bedienperson einen Hinweis darauf, wenn das Hauptsägeblatt 44 getauscht werden muss. Darüber hinaus kann durch die Frequenzanalyse auch auf den aktuellen Zustand weiterer Komponenten der Plattenbearbeitungsanlage geschlossen werden.

Es versteht sich, dass das im Zusammenhang mit Figur 9 beschriebene Verfahren nur eines von vielen möglichen Verfahren ist, jedoch zahlreiche andere Ausgestaltungen des Verfahrens möglich sind, mit denen ebenfalls in einem ersten Betriebsmodus (Prüfbetrieb) anhand einer Frequenzanalyse Drehzahlen des Werkzeugs ermittelt werden, die in schwingungstechnischer Hinsicht in einem zweiten Betriebsmodus (Normalbetrieb) zu vermeiden sind.

Der Einsatz der beiden Beschleunigungssensoren 62 und 66 ermöglicht es dabei, nicht nur Schwingungen in der Ebene des Werkzeughalteabschnitts 40 zu erfassen, sondern auch senkrecht hierzu. Es können also sowohl Unwuchten als auch in Bezug auf die Drehachse des Hauptsägeblatts 44 axiale Schwingungsauslenkungen erfasst werden.

Es versteht sich ferner, dass die Erfassung und Analyse der erfassten Signale der Sensoren 62-66 nicht auf den ersten Betriebsmodus beschränkt sein muss. Möglich ist auch, dass im zweiten Betriebsmodus, also während des normalen Betriebs der Plattenaufteilsäge 10, ebenfalls Signale erfasst werden und eine Schwingungsanalyse durchgeführt wird, um während des normalen Betriebs der Plattenaufteilsäge 10 deren Betrieb weiter optimieren zu können.

Auch versteht sich, dass das oben beschriebene Verfahren auch bei einer Plattenaufteilsäge mit nur einem Sägeblatt eingesetzt werden kann. Bei einer Plattenaufteilsäge mit Hauptsägeblatt und Vorritzblatt kann es ferner auch auf das Vorritzsägeblatt angewendet werden.

Hinzuweisen ist noch darauf, dass dass mittels der Schwingungsanalyse mindestens eine zweite Eigenfrequenz und eine dritte Eigenfrequenz ermittelt werden können. Da diese einen Spannungszustand des Werkzeugs, vorliegend also des Hauptsägeblatts 44 beschreiben, kann hieraus auf die aktuelle Werkzeugqualität geschlossen werden. Ein Werkzeugwechsel wegen eines verbrauchten oder beschädigten Werkzeugs oder wegen eines nicht geeigneten Werkzeugs kann somit sehr einfach, da ohnen Sichtinspektion oder sonstige komplexe Untersuchungen und ohne die Notwendigkeit eines Bearbeitungsvorgangs, geplant werden.

## Patentansprüche

1. Verfahren zum Betreiben einer Werkstückbearbeitungsanlage (10) zum Bearbeiten insbesonders plattenförmiger Werkstücke (60), bei dem mindestens ein Werkzeug (44, 46) in Drehung versetzt und von einer Sensoreinrichtung (68) mindestens eine Größe (f, A) erfasst wird, wobei das Verfahren folgende Schritte umfasst:
a. in einem ersten Betriebsmodus: Antreiben eines Werkzeugs (44, 46) der Werkstückbearbeitungsanlage (10) bei unterschiedlichen Drehzahlen (n),
b. während Schritt a: Erfassen einer Größe (f, A), welche während einer Drehung des Werkzeugs (44, 46) eine Schwingung mindestens in einem Bereich der Werkstückbearbeitungsanlage (10) charakterisiert, mittels mindestens einem Sensor (64), bei den unterschiedlichen Drehzahlen (n) des Werkzeugs (44, 46),
c. Auswerten der erfassten Größe (f, A, n) mittels einer Schwingungsanalyse, insbesondere einer Fourier-Analyse, und
d. in einem zweiten Betriebsmodus: Antreiben des Werkzeugs (44, 46) zur Bearbeitung eines Werkstücks (60) abhängig vom Ergebnis der Auswertung in Schritt c,
**dadurch gekennzeichnet, dass** die Größe ein Abstand und/ oder eine Bewegung des Werkzeugs (44) relativ zu einem das Werkzeug (44) tragenden Werkzeughalteabschnitt (40)ist.

2. Verfahren nach Anspruch 1, **dadurch gekennzeichnet, dass** in dem ersten Betriebsmodus kein Werkstück (60) bearbeitet wird.

3. Verfahren nach einem der Ansprüche 1 oder 2, **dadurch gekennzeichnet, dass** im Schritt a das Werkzeug (44, 46) nur in einem Drehzahlbereich betrieben wird und/oder im Schritt b die Größe nur in einem Drehzahlbereich erfasst wird und/oder im Schritt c die Schwingungsanalyse nur für einen Drehzahlbereich durchgeführt wird, welcher Drehzahlbereich ein Solldrehzahlbereich (Ns) für das verwendete Werkzeug (44, 46) und/oder das zu bearbeitende Werkstück (60) ist.

4. Verfahren nach einem der vorhergehenden Ansprüche, **dadurch gekennzeichnet, dass** im Schritt c mindestens eine Drehzahl (N) oder ein Drehzahlbereich und mindestens eine Frequenz (f1) oder ein Frequenzbereich (72, 76) ermittelt werden, bei denen eine Schwingungsamplitude (A) mindestens ein relatives Maximum aufweist.

5. Verfahren nach Anspruch 4, **dadurch gekennzeichnet, dass** die ermittelte Drehzahl (N) oder der ermittelte Drehzahlbereich mit einer Standard-Solldrehzahl (ns) des Werkzeugs (44, 46) in dem zweiten Betriebsmodus verglichen wird, und dass abhängig von dem Ergebnis des Vergleichs eine Aktion erfolgt.

6. Verfahren nach Anspruch 5, **dadurch gekennzeichnet, dass** dann, wenn die Standard-Solldrehzahl (ns) mit der ermittelten Drehzahl (N) übereinstimmt oder in dem ermittelten Drehzahlbereich liegt, eine Solldrehzahl (ns) des Werkzeugs (44, 46) in dem zweiten Betriebsmodus bestimmt wird, welche nicht mit der ermittelten Drehzahl (N) übereinstimmt oder gerade außerhalb des ermittelten Drehzahlbereichs liegt.

7. Verfahren nach einem der Ansprüche 1 bis 3, **dadurch gekennzeichnet, dass** im Schritt c in einem Solldrehzahlbereich für das verwendete Werkzeug und/oder das zu bearbeitende Werkstück mindestens eine Drehzahl oder ein Drehzahlbereich und mindestens eine Frequenz oder ein Frequenzbereich ermittelt werden, bei denen eine Schwingungsamplitude mindestens ein relatives Minimum aufweist.

8. Verfahren nach einem der vorhergehenden Ansprüche, **dadurch gekennzeichnet, dass** das Verfahren mindestens nach einem Wechsel des Werkzeugs (44, 46) durchgeführt wird.

9. Verfahren nach einem der vorhergehenden Ansprüche, **dadurch gekennzeichnet, dass** im Schritt c ein durch eine Inhomogenität hervorgerufener Störeinfluss mittels mindestens eines Filters eliminiert oder zumindest reduziert wird.

10. Verfahren nach einem der vorhergehenden Ansprüche, **dadurch gekennzeichnet, dass** die im Schritt c erfasste Größe mit einem Grenzwert verglichen wird, und dass abhängig vom Ergebnis des Vergleichs eine Aktion erfolgt.

11. Verfahren nach einem der vorhergehenden Ansprüche, **dadurch gekennzeichnet, dass** mittels der Schwingungsanalyse im Schritt c mindestens eine zweite Eigenfrequenz und vorzugsweise auch eine dritte Eigenfrequenz ermittelt wird, und dass aus der zweiten Eigenfrequenz bzw. der zweiten und der dritten Eigenfrequenz auf einen Werkzeugzustand geschlossen wird.

12. Werkstückbearbeitungsanlage (10) zum Bearbeiten insbesonders plattenförmiger Werkstücke (60), mit einem Werkzeughalteabschnitt (40), der ein Werkzeug (44) trägt, mit einem Antrieb (54, 56), dem vom Antrieb in Drehung versetzbaren Werkzeug (44, 46), einer Sensoreinrichtung (68) zur Erfassung mindestens einer Größe (f, A), und einer Steuer- und Regeleinrichtung (38), welche insbesondere mindestens einen Prozessor und einen Speicher aufweist, **dadurch gekennzeichnet, dass** die von der Sensoreinrichtung (68) erfasste Größe eine Schwingung mindestens in einem Bereich der Werkstückbearbeitungsanlage (10) charakterisiert und ein Abstand und/oder eine Bewegung des Werkzeugs (46) relativ zu dem Werkzeughalteabschnitt (40) ist, dass die Sensoreinrichtung (68) mindestens einen Sensor (64) aufweist, der an dem Werkzeughalteabschnitt (40) befestigt ist und der so ausgebildet ist, dass er den Abstand und/oder die Bewegung des Werkzeugs (44) relativ zu dem Werkzeughalteabschnitt (40) erfassen kann, und dass die Werkstückbearbeitungsanlage (10) zur Ausführung eines Verfahrens nach einem der vorhergehenden Ansprüche ausgebildet ist.

13. Werkstückbearbeitungsanlage (10) nach Anspruch 12, **dadurch gekennzeichnet, dass** sie eine stationäre erste Tragstruktur (14) und eine gegenüber dieser mindestens translatorisch bewegbare zweite Tragstruktur (20) aufweist, wobei das Werkzeug (44, 46) an der zweiten Tragstruktur (20) angeordnet ist, und dass die Sensoreinrichtung (68) mindestens einen mit der ersten Tragstruktur (14) gekoppelten Beschleunigungssensor und/oder mindestens einen mit der zweiten Tragstruktur (20) gekoppelten Beschleunigungssensor (62, 66) aufweist.

14. Werkstückbearbeitungsanlage (10) nach einem der Ansprüche 12-13, **dadurch gekennzeichnet, dass** sie als Plattenbearbeitungsanlage, insbesondere als Plattenaufteilsäge ausgebildet ist.

15. Werkstückbearbeitungsanlage (10) nach einem der Ansprüche 12-14, **dadurch gekennzeichnet, dass** die Sensoreinrichtung (68) mindestens einen Sensor (65) umfasst, der so ausgebildet ist, dass er Schall in einem Bearbeitungsbereich (18) erfassen kann.

## Claims

1. Method for operating a workpiece machining system (10) for machining in particular panel-like workpieces (60), in which method at least one tool (44, 46) is rotated and at least one variable (f, A) is detected by a sensor device (68), the method comprising the following steps:
a. in a first operating mode: driving a tool (44, 46) of the workpiece machining system (10) at different rotational speeds (s),
b. during step a: detecting, by means of at least one sensor (64) and at the different rotational speeds (n) of the tool (44, 46), a variable (f, A) which characterizes a vibration at least in one region of the workpiece machining system (10) during a rotation of the tool (44, 46),
c. evaluating the detected variable (f, A, n) by means of a vibration analysis, in particular a Fourier analysis, and
d. in a second operating mode: driving the tool (44, 46) to machine a workpiece (60) on the basis of the result of the evaluation in step c,
**characterized in that** the variable is a distance and/or a movement of the tool (44) relative to a tool holding portion (40) supporting the tool (44).

2. Method according to claim 1, **characterized in that** no workpiece (60) is machined in the first operating mode.

3. Method according to one of claims 1 or 2, **characterized in that** in step a the tool (44, 46) is operated only in a rotational speed range and/or in step b the variable is detected only in a rotational speed range and/or in step c the vibration analysis is carried out only for a rotational speed range, which rotational speed range is a target rotational speed range (Ns) for the tool (44, 46) used and/or the workpiece (60) to be machined.

4. Method according to one of the preceding claims, **characterized in that** in step c, at least one rotational speed (N) or rotational speed range and at least one frequency (f1) or frequency range (72, 76) are determined in which a vibration amplitude (A) has at least one relative maximum.

5. Method according to claim 4, **characterized in that** the determined rotational speed (N) or the determined rotational speed range is compared with a standard target rotational speed (ns) of the tool (44, 46) in the second operating mode, and **in that** an action takes place depending on the result of the comparison.

6. Method according to claim 5, **characterized in that** if the standard target rotational speed (ns) corresponds to the determined rotational speed (N) or lies in the determined rotational speed range, a target rotational speed (ns) of the tool (44, 46) is determined in the second operating mode that does not correspond to the determined rotational speed (N) or lies just outside the determined rotational speed range.

7. Method according to one of claims 1 to 3, **characterized in that** in step c, in a target rotational speed range for the tool used and/or the workpiece to be machined, at least one rotational speed or rotational speed range and at least one frequency or frequency range are determined in which a vibration amplitude has at least one relative minimum.

8. Method according to one of the preceding claims, **characterized in that** the method is carried out at least after a change of the tool (44, 46).

9. Method according to one of the preceding claims, **characterized in that** in step c, an interference effect caused by an inhomogeneity is eliminated or at least reduced by means of at least one filter.

10. Method according to one of the preceding claims, **characterized in that** the variable detected in step c is compared with a limit value, and **in that** an action takes place depending on the result of the comparison.

11. Method according to one of the preceding claims, **characterized in that** at least a second natural frequency and preferably also a third natural frequency is determined by means of the vibration analysis in step c, and **in that** a tool state is deduced from the second natural frequency or the second and the third natural frequency.

12. Workpiece machining system (10) for machining in particular panel-like workpieces (60), comprising a tool holding portion (40) which supports a tool (44), and comprising a drive (54, 56), the tool (44, 46) that can be rotated by the drive, a sensor device (68) for detecting at least one variable (f, A), and an open-loop and closed-loop control device (38), which in particular comprises at least one processor and a memory, **characterized in that** the variable detected by the sensor device (68) characterizes a vibration at least in one region of the workpiece machining system (10), and is a distance and/or a movement of the tool (46) relative to the tool holding portion (40), **in that** the sensor device (68) has at least one sensor (64) which is fastened to the tool holding portion (40) and is designed such that it can detect the distance and/or the movement of the tool (44) relative to the tool holding portion (40), and **in that** the workpiece machining system (10) is designed to carry out a method according to one of the preceding claims.

13. Workpiece machining system (10) according to claim 12, **characterized in that** it has a stationary first support structure (14) and a second support structure (20) which is movable at least translationally relative thereto, the tool (44, 46) being arranged on the second support structure (20), and **in that** the sensor device (68) has at least one acceleration sensor coupled to the first support structure (14) and/or at least one acceleration sensor (62, 66) coupled to the second support structure (20).

14. Workpiece machining system (10) according to one of claims 12-13, **characterized in that** it is designed as a panel machining system, in particular as a panel-sizing saw.

15. Workpiece machining system (10) according to one of claims 12-14, **characterized in that** the sensor device (68) comprises at least one sensor (65) which is designed such that it can detect sound in a machining region (18).

## Revendications

1. Procédé destiné à faire fonctionner une installation d'usinage de pièces (10) pour usiner des pièces (60) en particulier en forme de plaque, dans lequel au moins un outil (44, 46) est mis en rotation et au moins une grandeur (f, A) est détectée par un dispositif capteur (68), dans lequel le procédé comprend les étapes suivantes :
a. dans un premier mode de fonctionnement: entraîner à différentes vitesses (n) un outil (44, 46) de l'installation d'usinage de pièces (10),
b. pendant l'étape a: détecter une grandeur (f, A) qui caractérise une vibration dans au moins une zone de l'installation d'usinage de pièces (10) lors d'une rotation de l'outil (44, 46), au moyen d'au moins un capteur (64), aux différentes vitesses (n) de l'outil (44, 46),
c. évaluer la grandeur détectée (f, A, n) au moyen d'une analyse vibratoire, en particulier d'une analyse de Fourier, et
d. dans un deuxième mode de fonctionnement: entraîner l'outil (44, 46) pour usiner une pièce (60) en fonction du résultat de l'évaluation à l'étape c, **caractérisé par le fait que** la grandeur est une distance et/ou un mouvement de l'outil (46) par rapport à une section de maintien d'outil (40) portant l'outil (44) .

2. Procédé selon la revendication 1, **caractérisé par le fait qu'**aucune pièce (60) n'est usinée dans le premier mode de fonctionnement.

3. Procédé selon l'une quelconque des revendications 1 ou 2, **caractérisé par le fait que**, à l'étape a l'outil (44, 46) n'est actionné que dans une plage de vitesses et/ou, à l'étape b, la grandeur b n'est détectée que dans une plage de vitesses et/ou, à l'étape c, l'analyse vibratoire n'est effectuée que pour une plage de vitesses, laquelle plage de vitesses est une plage de vitesses cible (Ns) pour l'outil (44, 46) utilisé et/ou la pièce (60) à usiner.

4. Procédé selon l'une quelconque des revendications précédentes, **caractérisé par le fait que**, à l'étape c, on détermine au moins une vitesse (N) ou une plage de vitesses et au moins une fréquence (f1) ou une plage de fréquences (72, 76), dans lesquelles une amplitude de vibration (A) présente au moins un maximum relatif.

5. Procédé selon la revendication 4, **caractérisé par le fait que** la vitesse déterminée (N) ou la plage de vitesses déterminée est comparée à une vitesse cible standard (ns) de l'outil (44, 46) dans le deuxième mode de fonctionnement, et qu'une action a lieu en fonction du résultat de la comparaison.

6. Procédé selon la revendication 5, **caractérisé par le fait que** si la vitesse cible standard (ns) correspond à la vitesse déterminée (N) ou se situe dans la plage de vitesses déterminée, une vitesse cible (ns) de l'outil (44, 46) est déterminée dans le deuxième mode de fonctionnement, laquelle ne correspond pas à la vitesse déterminée (N) ou se situe juste en dehors de la plage de vitesses déterminée.

7. Procédé selon l'une quelconque des revendications 1 à 3, **caractérisé par le fait que**, à l'étape c, au moins une vitesse ou une plage de vitesses et au moins une fréquence ou une plage de fréquences sont déterminées dans une plage de vitesses cible pour l'outil utilisé et/ou la pièce à usiner, dans lesquelles une amplitude de vibration présente au moins un minimum relatif.

8. Procédé selon l'une quelconque des revendications précédentes, **caractérisé par le fait que** le procédé est mis en oeuvre au moins après un changement de l'outil (44, 46).

9. Procédé selon l'une quelconque des revendications précédentes, **caractérisé par le fait que**, à l'étape c, une influence perturbatrice provoquée par une inhomogénéité est éliminée ou au moins réduite au moyen d'au moins un filtre.

10. Procédé selon l'une quelconque des revendications précédentes, **caractérisé par le fait que** la grandeur détectée à l'étape c est comparée à une valeur limite et qu'une action a lieu en fonction du résultat de la comparaison.

11. Procédé selon l'une quelconque des revendications précédentes, **caractérisé par le fait qu'**au moins une deuxième fréquence propre et de préférence également une troisième fréquence propre sont déterminées au moyen de l'analyse vibratoire à l'étape c, et qu'un état d'outil est déduit de la deuxième fréquence propre ou bien des deuxième et troisième fréquences propres.

12. Installation d'usinage de pièces (10) pour usiner des pièces (60) en particulier en forme de plaque, avec une section de maintien d'outil (40) qui porte un outil (44), avec un entraînement (54, 56), l'outil (44, 46) qui peut être mis en rotation par l'entraînement, un dispositif capteur (68) pour détecter au moins une grandeur (f, A) et un dispositif de commande et de régulation (38) qui comprend en particulier au moins un processeur et une mémoire, **caractérisée par le fait que** la grandeur détectée par le dispositif capteur (68) caractérise une vibration au moins dans une zone de l'installation d'usinage de pièces (10) et est une distance et/ou un mouvement de l'outil (46) par rapport à la section de maintien d'outil (40), que le dispositif capteur (68) comprend au moins un capteur (64) qui est fixé sur la section de maintien d'outil (40) et qui est conçu de manière à ce qu'il puisse détecter la distance et/ou le mouvement de l'outil (44) par rapport à la section de maintien d'outil (40), et que l'installation d'usinage de pièces (10) est conçue pour mettre en oeuvre un procédé selon l'une quelconque des revendications précédentes.

13. Installation d'usinage de pièces (10) selon la revendication 12, **caractérisée par le fait qu'**il comprend une première structure de support (14) stationnaire et une deuxième structure de support (20) qui est au moins mobile en translation par rapport à celle-ci, dans lequel l'outil (44, 46) est disposé sur la deuxième structure de support (20), et que le dispositif capteur (68) présente au moins un capteur d'accélération couplé à la première structure de support (14) et/ou au moins un capteur d'accélération (62, 66) couplé à la deuxième structure de support (20) .

14. Installation d'usinage de pièces (10) selon l'une quelconque des revendications 12 à 13, **caractérisée par le fait qu'**elle est réalisée en tant qu'installation d'usinage de panneaux, en particulier comme scie à diviser des panneaux.

15. Installation d'usinage de pièces (10) selon l'une quelconque des revendications 12 à 14, **caractérisée par le fait que** le dispositif capteur (68) comprend au moins un capteur (65) qui est conçu de manière à ce qu'il puisse détecter du son dans une zone d'usinage (18) .
